(19) Europäisches Patentamt
European Patent Office
Office européen des brevets

(11) **EP 4 772 768 A1**

(12) **EUROPEAN PATENT APPLICATION**
published in accordance with Art. 153(4) EPC

(43) Date of publication:
**08.07.2026 Bulletin 2026/28**

(51) International Patent Classification (IPC):
**F16H 57/04** $^{(2010.01)}$    **F16N 29/02** $^{(2006.01)}$

(21) Application number: **24878783.0**

(86) International application number:
**PCT/CN2024/120243**

(22) Date of filing: **23.09.2024**

(87) International publication number:
**WO 2025/082135 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.10.2023 CN 202311347099**

(71) Applicant: **Dongfeng Motor Group Co., Ltd.**
**Wuhan, Hubei 430056 (CN)**

(72) Inventors:
• **KE, Menglong**
**Wuhan, Hubei 430056 (CN)**
• **XU, Jing**
**Wuhan, Hubei 430056 (CN)**
• **HUANG, Fengqin**
**Wuhan, Hubei 430056 (CN)**
• **YU, Jiajia**
**Wuhan, Hubei 430056 (CN)**
• **KONG, Bo**
**Wuhan, Hubei 430056 (CN)**

(74) Representative: **Lohmanns Lohmanns & Partner mbB**
**Benrather Schlossallee 49-53**
**40597 Düsseldorf (DE)**

(54) **LUBRICANT FLOW RATE CONTROL METHOD AND DEVICE**

(57) A lubricant flow rate control method and device. A vehicle comprises an electric drive system; the electric drive system comprises a planetary row and an oil pump; in the planetary row, planetary gears (3a) are supported on pin shafts (3c) of a planetary carrier (3) by means of a needle bearing (3b). The control method comprises: according to the current planetary carrier torque, the current planetary carrier rotating speed, the current sun gear torque and the current sun gear rotating speed, determining the current load value of the needle bearing (3b) of the planetary row; and, according to the current load value and a preset relation curve, determining a target lubricant flow rate of the needle bearing (3b), the preset relation curve being used for representing the corresponding relation between the load value of the needle bearing (3b) and the lubricant flow rate, or the corresponding relation between the load value of the needle bearing (3b) and the rotating speed of the oil pump.

Determining a current load value of the needle roller bearings of the planetary gear set according to a current planet carrier torque, a current planet carrier rotational speed, a current sun gear torque, and a current sun gear rotational speed — 101

Determining a target lubrication flow rate of the needle roller bearings according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed — 102

Fig. 1

**Description**

**Field of the Invention**

The present application belongs to the technical field of vehicle control, and in particular to a lubrication flow rate control method and device.

**Background of the Invention**

In hybrid electric drive vehicles and pure electric drive vehicles, a planetary gear set is frequently used to achieve speed ratio conversion between an engine and a generator, and between an electric motor and a wheel end, so as to ensure that the generator is driven by the engine to operate in a high-efficiency region at a relatively high rotational speed, and to achieve speed reduction and torque increase from the electric motor to the wheel end. Compared with parallel gear shafts, the planetary gear set significantly reduces the space occupied by the gear shafts. Needle roller bearings supporting planetary gears in the planetary gear set are sensitive to lubrication flow rate, and constitute the most critical part in lubrication of the entire electric drive system.
How to control the lubrication flow rate to ensure reliability of the needle roller bearings of the planetary gear set is an urgent problem to be solved.

**Summary of the Invention**

The embodiments of the present application provide a lubrication flow rate control method and device, thereby ensuring reliability of needle roller bearings of a planetary gear set at least to some extent.
Other features and advantages of the present application will become apparent from the following detailed description, or can be partially learned through practice of the present application.
According to a first aspect of embodiments of the present application, a lubrication flow rate control method is provided, applied to a vehicle, wherein the vehicle comprises an electric drive system, the electric drive system comprises a planetary gear set and an oil pump, in the planetary gear set, planetary gears are supported on pin shafts of a planet carrier through needle roller bearings, and the control method comprises:

determining a current load value of the needle roller bearings of the planetary gear set according to a current planet carrier torque, a current planet carrier rotational speed, a current sun gear torque, and a current sun gear rotational speed; and
determining a target lubrication flow rate of the needle roller bearings according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed.

In some embodiments of the present application, based on the above solution, the electric drive system further comprises an engine and a generator, the planet carrier is connected with the engine, and the sun gear is connected with the generator, and the step of determining the current load value of the needle roller bearings of the planetary gear set according to the current planet carrier torque, the current planet carrier rotational speed, the current sun gear torque, and the current sun gear rotational speed comprises:

taking a current engine torque as the current planet carrier torque, taking a current engine rotational speed as the current planet carrier rotational speed, taking a current generator torque as the current sun gear torque, and taking a current generator rotational speed as the current sun gear rotational speed; and
determining the current load value according to the current engine torque, the current engine rotational speed, the current generator torque, the current generator rotational speed, the number of teeth of the sun gear, the number of teeth of a ring gear, a normal pressure angle of the planetary gears, a helix angle of the planetary gears, and a pitch circle diameter of the planetary gears.

In some embodiments of the present application, based on the above solution, the current load value is calculated according to the following formula:

$$X = \left| \frac{2\left(T_e - \frac{T_s}{-\left(\frac{Z_2}{Z_1}+1\right)}\right)(V_e - V_s)\tan\alpha}{d\cos\beta} \right| ;$$

wherein X is the current load value, $T_e$ is the current engine torque, $T_s$ is the current generator torque, $Z_1$ is the number of teeth of the sun gear, $Z_2$ is the number of teeth of the ring gear, $V_e$ is the current engine rotational speed, $V_s$ is the current generator rotational speed, $\alpha$ is the normal pressure angle, $\beta$ is the helix angle, and d is the pitch circle diameter.

In some embodiments of the present application, based on the above solution, the electric drive system further comprises an engine and a generator, the planet carrier is connected with the engine, and the sun gear is connected with the generator, and the step of determining the current load value of the needle roller bearings of the planetary gear set according to the current planet carrier torque, the current planet carrier rotational speed, the current sun gear torque, and the current sun gear rotational speed comprises:

taking a current engine torque as the current planet carrier torque, taking a current engine rotational speed as the current planet carrier rotational speed, taking a current generator torque as the current sun gear torque, and taking a current generator rotational speed as the current sun gear rotational speed;

determining a speed ratio coefficient according to the number of teeth of the sun gear and the number of teeth of the ring gear; and

determining the current load value according to the current engine torque, the current engine rotational speed, the current generator torque, the current generator rotational speed, and the speed ratio coefficient.

In some embodiments of the present application, based on the above solution, the current load value is calculated according to the following formula:

$$X = \left| (T_e - BT_s)(V_e - V_s) \right| ;$$

$$K = -(Z_2/Z_1 + 1);$$

wherein X is the current load value, $T_e$ is the current engine torque, $T_s$ is the current generator torque, K is the speed ratio coefficient, $V_e$ is the current engine rotational speed, $V_s$ is the current generator rotational speed, $Z_1$ is the number of teeth of the sun gear, and $Z_2$ is the number of teeth of the ring gear.

In some embodiments of the present application, based on the above solution, the electric drive system further comprises a electric motor, the planet carrier is connected with a wheel-end output shaft, and the sun gear is connected with the electric motor, and the step of determining the current load value of the needle roller bearings of the planetary gear set according to the current planet carrier torque, the current planet carrier rotational speed, the current sun gear torque, and the current sun gear rotational speed comprises:

taking a current wheel-end output shaft torque as the current planet carrier torque, taking a current wheel-end output shaft rotational speed as the current planet carrier rotational speed, taking a current electric motor torque as the current sun gear torque, and taking a current electric motor rotational speed as the current sun gear rotational speed; and

determining the current load value of the needle roller bearings of the planetary gear set according to the current wheel-end output shaft torque, the current wheel-end output shaft rotational speed, the current electric motor torque, and the current electric motor rotational speed.

In some embodiments of the present application, based on the above solution, the step of determining the target lubrication flow rate of the needle roller bearings according to the current load value and the preset relationship curve comprises:

when the preset relationship curve is configured to represent the correspondence between the load value of the needle roller bearings and the lubrication flow rate, determining a lubrication flow rate corresponding to the current load value from the preset relationship curve, and taking the determined lubrication flow rate as the target lubrication flow rate of the needle roller bearings; and

when the preset relationship curve is configured to represent the correspondence between the load value of the needle roller bearings and the oil pump rotational speed, determining the oil pump rotational speed corresponding to the current load value from the preset relationship curve, and obtaining the target lubrication flow rate of the needle roller bearings according to the determined oil pump rotational speed.

In some embodiments of the present application, based on the above solution, the control method further comprises:

performing a reliability test on the electric drive system to obtain a plurality of load values of the needle roller bearings of the planetary gear set, and the lubrication flow rate or the oil pump rotational speed corresponding to each load value under the condition that the reliability test is passed; and

fitting all the load values and the lubrication flow rates corresponding to the load values, or fitting all the load values and the oil pump rotational speeds corresponding to the load values to obtain the preset relationship curve.

In some embodiments of the present application, based on the above solution, the control method further comprises:
controlling a target rotational speed of the oil pump according to the target lubrication flow rate.
According to a second aspect of embodiments of the present application, a lubrication flow rate control device is provided, comprising a processor and a memory, wherein the memory stores computer program instructions executable by the processor, and when the computer program instructions are executed by the processor, the processor is configured to implement the steps of the method according to any one of the first aspect described above.
In the present application, a current load value of the needle roller bearings of the planetary gear set is determined according to a current planet carrier torque, a current planet carrier rotational speed, a current sun gear torque, and a current sun gear rotational speed; and a target lubrication flow rate of the needle roller bearings is determined according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed. The technical solution provided by the present application enables precise quantitative control of the lubrication flow rate according to the current load value borne by the needle roller bearings of the planetary gear set, thereby not only ensuring reliability of the needle roller bearings but also reducing power consumption of the vehicle.
It should be understood that the foregoing general description and the following detailed description are merely exemplary and explanatory, and do not limit the present application.

**Brief Description of the Drawings**

The drawings are incorporated into the specification and form a part thereof, illustrating embodiments in accordance with the present application and being used together with the specification to explain the principles of the present application. It will be apparent that the drawings in the following description are merely some embodiments of the present application, for those of ordinary skill in the art, other drawings may also be obtained based on these drawings without any inventive effort. In the figures:

Fig. 1 illustrates a flowchart of a lubrication flow rate control method in one embodiment of the present application;

Fig. 2 illustrates a structural diagram of a planetary gear set in one embodiment of the present application;

Fig. 3 illustrates a schematic diagram of a preset relationship curve in one embodiment of the present application;

Fig. 4 illustrates a flowchart of a lubrication flow rate control method in another embodiment of the present application;

Fig. 5 illustrates a schematic diagram of data flow in Fig. 4;

Fig. 6 illustrates a block diagram of a lubrication flow rate control apparatus in one embodiment of the present application; and

Fig. 7 illustrates a structural diagram of a lubrication flow rate control device in one embodiment of the present application.

## Detailed Description of the Embodiments

In the following, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those of ordinary skill in the art without inventive efforts shall fall within the protection scope of the present application.

In addition, the described features, structures, or characteristics can be combined in any suitable manner in one or more embodiments. In the following description, numerous specific details are provided in order to give a full understanding of the embodiments of the present application. However, those skilled in the art will realize that the technical solutions of the present application can be practiced without one or more of the specific details, or other methods, components, apparatus, steps, etc. can be adopted. In other cases, well-known methods, apparatus, implementations, or operations are not described in detail so as to avoid obscuring aspects of the present application.

The block diagrams shown in the drawings merely represent functional entities and do not necessarily correspond to physically independent entities. That is, the functional entities can be implemented in software, or can be implemented in one or more hardware modules or integrated circuits, or can be implemented in different networks and/or processor devices and/or microcontroller devices.

The flowcharts shown in the drawings are illustrative only, and do not necessarily comprise all contents and operations/steps, nor must they be executed in the order described. For example, some operations/steps can be further decomposed, and some operations/steps can be combined or partially combined. Therefore, the actual order of execution may change according to actual conditions.

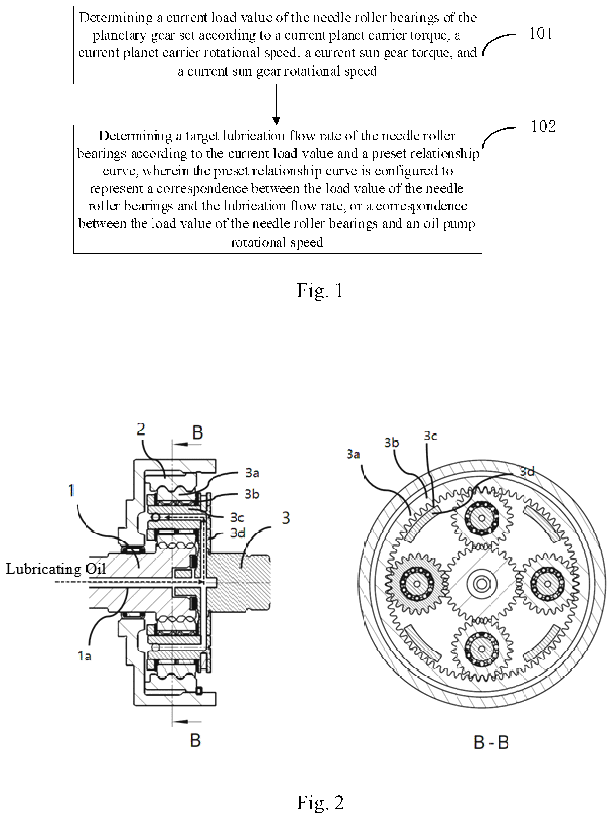

Fig. 1 illustrates a flowchart of a lubrication flow rate control method in one embodiment. As shown in Fig. 1, a lubrication flow rate control method is provided, applied to a vehicle, wherein the vehicle comprises an electric drive system, the electric drive system comprises a planetary gear set and an oil pump, and the planetary gear set comprises needle roller bearings, planetary gears, and a planet carrier. In the planetary gear set, the planetary gears are supported on pin shafts of the planet carrier through the needle roller bearings. The control method can comprise the following S101 and S102.

In S101, a current load value of the needle roller bearings of the planetary gear set is determined according to a current planet carrier torque, a current planet carrier rotational speed, a current sun gear torque, and a current sun gear rotational speed.

It should be noted that the needle roller bearings supporting the planetary gears in the planetary gear set typically operate under conditions of an enclosed environment, poor heat dissipation, and variable loads, and are sensitive to lubrication flow rate, thereby constituting the most critical part in lubrication of the entire electric drive system. If the lubrication flow rate is controlled according to a real-time load borne by the needle roller bearings, not only reliability of the needle roller bearings can be ensured, but also power consumption of an oil pump system and even an entire powertrain can be reduced and efficiency can be improved.

In some embodiments, the electric drive system further comprises an engine and a generator, the planet carrier is connected with the engine, and the sun gear is connected with the generator. In this case, a current engine torque can be taken as a current planet carrier torque, a current engine rotational speed can be taken as a current planet carrier rotational speed, a current generator torque can be taken as a current sun gear torque, and a current generator rotational speed can be taken as a current sun gear rotational speed, and the current load value of the needle roller bearings can be determined according to the current engine torque, the current engine rotational speed, the current generator torque, and the current generator rotational speed.

In the implementation process, the current generator torque and the current generator rotational speed of the generator can be read through a motor and transmission control unit (MTCU), and the current engine torque and the current engine rotational speed of the engine can be read through an engine control unit (ECU), and the current load value of the needle roller bearings of the planetary gear set can be determined according to the read current engine torque, current engine rotational speed, current generator torque, and current generator rotational speed.

Fig. 2 illustrates a structural diagram of a planetary gear set in one embodiment. As shown in Fig. 2, the planetary gear set comprises a sun gear shaft 1, a ring gear 2, a planet carrier 3, planetary gears 3a, needle roller bearings 3b, planet carrier pin shafts 3c, a planet carrier oil passage 3d, and a sun gear shaft core oil passage 1a, wherein the needle roller bearings 3b are arranged between the planetary gears 3a and the planet carrier pin shafts 3c.

Lubricating oil injected by an oil pump passes through the sun gear shaft core oil passage 1a and is distributed to each needle roller bearing 3b through the planet carrier oil passage 3d, thereby achieving lubrication of the needle roller bearings 3b. The lubrication demand of the needle roller bearings 3b is mainly related to a force or torque applied thereto, a rotational speed difference between an inner ring and an outer ring (the inner ring is the outer circle of the planet carrier pin shaft 3c, and the outer ring is the inner circle of the planetary gear 3a), and a bearing diameter (under the same rotational speed, the larger bearing diameter corresponds to the higher linear speed and the longer friction distance). Since the bearing diameter is a constant value, only the first two factors are considered herein, and a product of the first two factors is taken as the load value of the needle roller bearings 3b, which can be understood as work or energy corresponding to a load borne by the needle roller bearings 3b.

The load borne by the planetary gears originates from driving by the planet carrier and/or the sun gear. Since the sun gear shaft 1 is connected with the generator and the planet carrier 3 is connected with the engine, the generator torque and generator rotational speed can be correspondingly regarded as the sun gear torque and sun gear rotational speed, and the engine torque and the engine rotational speed can be correspondingly regarded as the planet carrier torque and the planet carrier rotational speed. Given the measured sun gear torque and rotational speed (i.e., the generator torque and rotational speed) and the planet carrier torque and rotational speed (i.e., the engine torque and rotational speed), according to basic principles of the planet carrier, a ratio of the sun gear torque to the planet gear torque is given by $T_s$: $T_e=-(Z_2/Z_1+1)$. Using the above formula, the torque transmitted from the sun gear to the planetary gears can be calculated. Based on fundamental principles of helical gear forces, and taking into account parameters such as a normal pressure angle $\alpha$, a helix angle $\beta$, and a pitch circle diameter $d$ of the planetary gears, the torque can be converted into force. Combining the above methods for torque calculation and force calculation, a calculation formula 1 for the current load value of the needle roller bearings 3b based on a radial force $F_r$ can be obtained.

Since the parameters such as the normal pressure angle $\alpha$, the helix angle $\beta$, and the pitch circle diameter $d$ are constant values, a calculation formula 2 for the current load value based on a planet carrier pin shaft torque $T_n$ can also be obtained.

Either of the above two formulas can be used to calculate the current load value borne by the needle roller bearings of the planet carrier.

In some embodiments, the current load value can be determined according to the current engine torque, the current engine rotational speed, the current generator torque, the current generator rotational speed, the number of teeth of the sun gear, the number of teeth of the ring gear, the normal pressure angle of the planetary gears, the helix angle of the planetary gears, and the pitch circle diameter of the planetary gears.

Specifically, the current load value can be calculated according to the following Formula 1:

$$ X = F_r V_n = \frac{2 T_n V_n \tan \alpha}{d \cos \beta} = \left| \frac{2 \left( T_e - \frac{T_s}{-\left(\frac{Z_2}{Z_1}+1\right)} \right) (V_e - V_s) \tan \alpha}{d \cos \beta} \right|; $$

wherein X is the current load value, $T_e$ is the current engine torque, $T_s$ is the current generator torque, $Z_1$ is the number of teeth of the sun gear, $Z_2$ is the number of teeth of the ring gear, $V_e$ is the current engine rotational speed, $V_s$ is the current generator rotational speed, $\alpha$ is the normal pressure angle, $\beta$ is the helix angle, and d is the pitch circle diameter, $F_r$ is the radial force of the needle roller bearings, and $V_n$ is the rotational speed of the needle roller bearings (i.e., the difference between the rotational speed of the planetary gears and the rotational speed of the planet carrier pin shafts).

In other embodiments, a speed ratio coefficient can be determined according to the number of teeth of the sun gear and the number of teeth of the ring gear; and the current load value can be determined according to the current engine torque, current engine rotational speed, current generator torque, current generator rotational speed, and the speed ratio coefficient.

Specifically, the current load value can be calculated according to the following Formula 2:

$$ X = \left| (T_e - K T_s)(V_e - V_s) \right| $$

$$ K=-(Z_2/Z_1+1); $$

wherein X is the current load value, $T_e$ is the current engine torque, $T_s$ is the current generator torque, K is the speed ratio coefficient, $V_e$ is the current engine rotational speed, $V_s$ is the current generator rotational speed, $T_n$ is the planet carrier pin shaft torque, and $V_n$ is the rotational speed of the needle roller bearings (i.e., the difference between the rotational speed of the planetary gears and the rotational speed of the planet carrier pin shafts).

In other embodiments, the electric drive system further comprises an electric motor, the planet carrier is connected to a wheel-end output shaft, and the sun gear is connected to the electric motor, and the step of determining the current load value of the needle roller bearings of the planetary gear set according to the current planet carrier torque, the current planet carrier rotational speed, the current sun gear torque, and the current sun gear rotational speed comprises: taking a current wheel-end output shaft torque as the current planet carrier torque, taking a current wheel-end output shaft rotational speed as the current planet carrier rotational speed, taking a current electric motor torque as the current sun gear torque, and taking a current electric motor rotational speed as the current sun gear rotational speed; and determining the current load value of the needle roller bearings of the planetary gear set according to the current wheel-end output shaft torque, the current wheel-end output shaft rotational speed, the current electric motor torque, and the current electric motor rotational speed.

The specific method for determining the current load value can refer to the above two formulas, through replacing the current engine torque with the current wheel-end output shaft torque, the current engine rotational speed with the current wheel-end output shaft rotational speed, the current generator torque with the current electric motor torque, and the current generator rotational speed with the current electric motor rotational speed, and is not repeated herein.

It should be understood that this embodiment is applicable to a configuration in which the planetary gear set is connected to the electric motor and the wheel-end output shaft, wherein the sun gear is connected to the electric motor and the planet carrier is connected to the wheel-end output shaft, thereby enabling speed reduction and torque increase from the electric motor to the wheel end.

In S102, a target lubrication flow rate of the needle roller bearings is determined according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed.

In some embodiments, a reliability test can be performed on the electric drive system to obtain a plurality of load values of the needle roller bearings of the planetary gear set, and the lubrication flow rate or the oil pump rotational speed corresponding to each load value under the condition that the reliability test is passed; and all the load values and the lubrication flow rates corresponding to the load values can be fitted, or all the load values and the oil pump rotational speeds corresponding to the load values can be fitted to obtain the preset relationship curve.

Specifically, the reliability tests such as durability tests or gear-bearing sintering tests, can be used to determine the oil pump rotational speed required for passing the test or the flow rate for lubricating the needle roller bearings at the required positions under different load conditions of the vehicle electric drive system. In this way, the oil pump rotational speed or lubrication flow rate of the needle roller bearings corresponding to each load value can be obtained, thereby determining the relationship curve between the load value and the oil pump rotational speed, or between the load value and the lubrication flow rate.

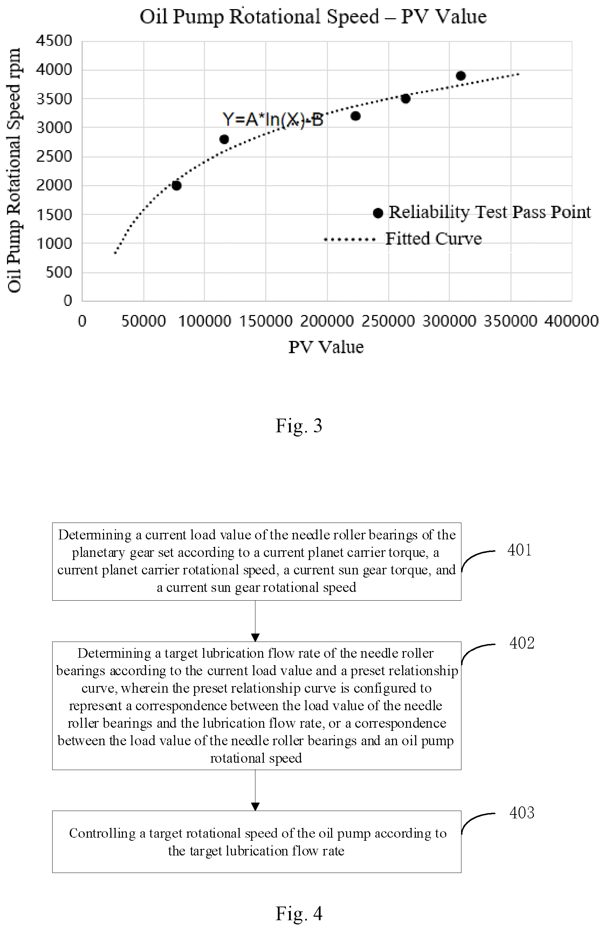

Fig. 3 illustrates a schematic diagram of a preset relationship curve in one embodiment. As shown in Fig. 3, the preset relationship curve can be obtained through fitting as $Y = A*\ln(X)-B$, wherein Y is the oil pump rotational speed, X is the load value (i.e., PV value), and A and B are constants fitted from actual data. These constants vary for different scenarios or objects.

In some embodiments, when the preset relationship curve is configured to represent a correspondence between the load value of the needle roller bearings and the lubrication flow rate, a lubrication flow rate corresponding to the current load value is determined from the preset relationship curve, and the determined lubrication flow rate is taken as the target lubrication flow rate of the needle roller bearings.

In other embodiments, when the preset relationship curve is configured to represent a correspondence between the load value of the needle roller bearings and the oil pump rotational speed, the oil pump rotational speed corresponding to the current load value is determined from the preset relationship curve, and the target lubrication flow rate of the needle roller bearings is obtained according to the determined oil pump rotational speed.

Referring again to Fig. 3, according to the preset relationship curve $Y=A*\ln(X)-B$ and the current load value $X_1$, the oil pump rotational speed $Y_1$ corresponding to the current load value $X_1$ can be calculated. It can be understood that if the oil pump rotational speed satisfies the lubrication flow rate of the needle roller bearings, it also essentially satisfies the lubrication requirements of the planetary gear set. Therefore, based on the relationship between the lubrication flow rate of the needle roller bearings and the oil pump rotational speed, the lubrication flow rate corresponding to the oil pump rotational speed $Y_1$ can be determined and taken as the target lubrication flow rate.

In the embodiments of the present application, the current load value of the needle roller bearings is determined according to the current engine torque, current engine rotational speed, current generator torque, and current generator rotational speed; and the target lubrication flow rate of the needle roller bearings is determined according to the current load value and the preset relationship curve, and the preset relationship curve is configured to represent the correspondence between the load value of the needle roller bearings and the lubrication flow rate, or between the load value and the oil pump rotational speed. The technical solution provided by the present application enables precise quantitative control of the lubrication flow rate according to the current load value borne by the needle roller bearings of the planetary gear set, thereby not only ensuring reliability of the needle roller bearings but also reducing power consumption of the vehicle.

Fig. 4 illustrates a flowchart of a lubrication flow rate control method in another embodiment. As shown in Fig. 4, the lubrication flow rate control method can further comprise the following steps:

S401, determining a current load value of the needle roller bearings of the planetary gear set according to a current planet carrier torque, a current planet carrier rotational speed, a current sun gear torque, and a current sun gear rotational speed;

S402, determining a target lubrication flow rate of the needle roller bearings according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed; and

S403, controlling a target rotational speed of the oil pump according to the target lubrication flow rate.

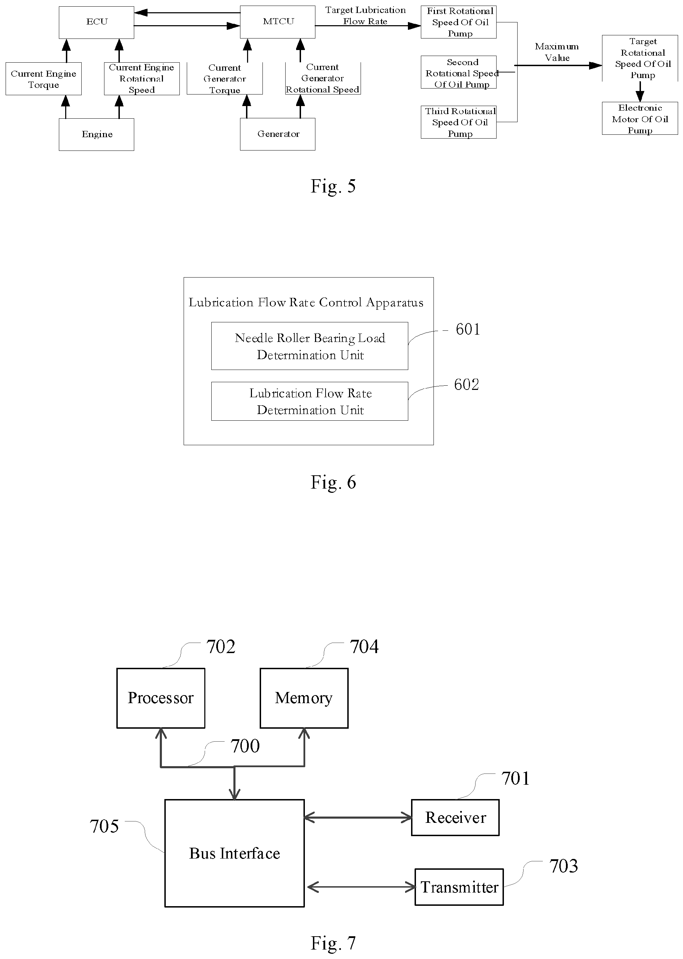

Fig. 5 illustrates a schematic diagram of data flow shown in Fig. 4. As shown in Fig. 5, the ECU reads the current engine torque and current engine rotational speed and exchanges this data with the MTCU, and the MTCU reads the current generator torque and current generator rotational speed. The MTCU calculates the current load value of the needle roller bearings based on relevant data from the engine and generator using Formula 1 or Formula 2, determines the flow rate that satisfies the lubrication requirements of the needle roller bearings in the planetary gear set (i.e., the target lubrication flow rate) according to the preset relationship curve, calculates a first rotational speed of the oil pump required to achieve the target lubrication flow rate, obtains a second rotational speed of the oil pump required to meet the electric motor cooling demand, obtains a third rotational speed of the oil pump required to meet other system requirements, selects the largest value among the first, second, and third rotational speeds as the target rotational speed of the oil pump, and finally controls the electric motor of the electronic oil pump to operate according to the target rotational speed.

The embodiment of the present application determines the target lubrication flow rate of the needle roller bearings based on the current load value of the needle roller bearings, and then controls the target rotational speed of the oil pump based on the target lubrication flow rate, thereby reducing the power consumption of the electric drive system and the vehicle.

The following describes an apparatus embodiment of the present application, which can be adopted to implement the lubrication flow rate control method in the above embodiments of the present application. For details not disclosed in this apparatus embodiment, reference can be made to the embodiments of the lubrication flow rate control method described above.

Fig. 6 illustrates a block diagram of a lubrication flow rate control apparatus in the embodiment of the present application.

As shown in Fig. 6, the lubrication flow rate control apparatus in the embodiment of the present application is applied to a vehicle, the vehicle comprises an electric drive system, the electric drive system comprises a planetary gear set and an oil pump, and in the planetary gear set, planetary gears are supported on pin shafts of a planet carrier through needle roller bearings. The lubrication flow rate control apparatus comprises: a needle roller bearing load determination unit 601 and a lubrication flow rate determination unit 602. The needle roller bearing load determination unit 601 is configured to determine a current load value of the needle roller bearings of the planetary gear set according to a current planet carrier torque, a current planet carrier rotational speed, a current sun gear torque, and a current sun gear rotational speed. The lubrication flow rate determination unit 602 is configured to determine a target lubrication flow rate of the needle roller bearings according to the current load value and a preset relationship curve, the preset relationship curve is configured to represent a correspondence between the load value of the needle roller bearings and the lubrication flow rate, or a correspondence between the load value of the needle roller bearings and an oil pump rotational speed.

In some embodiments of the present application, based on the above solution, the electric drive system further comprises an engine and a generator, and the planet carrier is connected with the engine and the sun gear is connected with the generator. The needle roller bearing load determination unit 601 is further configured to take a current engine torque as a current planet carrier torque, take a current engine rotational speed as a current planet carrier rotational speed, take a current generator torque as a current sun gear torque, and take a current generator rotational speed as a current sun gear rotational speed; and determine the current load value according to the current engine torque, the current engine rotational speed, the current generator torque, the current generator rotational speed, the number of teeth of the sun gear, the number of teeth of a ring gear, a normal pressure angle of the planetary gears, a helix angle of the planetary gears, and a pitch circle diameter of the planetary gears.

In some embodiments of the present application, based on the above solution, the current load value is calculated according to the following formula:

$$X = \left| \frac{2\left(T_e - \frac{T_s}{-\left(\frac{Z_2}{Z_1}+1\right)}\right)(V_e - V_s)\tan\alpha}{d\,\cos\beta} \right|;$$

wherein X is the current load value, $T_e$ is the current engine torque, $T_s$ is the current generator torque, $Z_1$ is the number of teeth of the sun gear, $Z_2$ is the number of teeth of the ring gear, $V_e$ is the current engine rotational speed, $V_s$ is the current generator rotational speed, $\alpha$ is the normal pressure angle, $\beta$ is the helix angle, and d is the pitch circle diameter.

In some embodiments of the present application, based on the above solution, the electric drive system further comprises an engine and a generator, and the planet carrier is connected with the engine and the sun gear is connected with the generator. The needle roller bearing load determination unit 601 is further configured to take a current engine torque as a current planet carrier torque, take a current engine rotational speed as a current planet carrier rotational speed, take a current generator torque as a current sun gear torque, and take a current generator rotational speed as a current sun gear rotational speed; determine a speed ratio coefficient according to the number of teeth of the sun gear and the number of teeth of the ring gear; and determine the current load value according to the current engine torque, the current engine rotational speed, the current generator torque, the current generator rotational speed, and the speed ratio coefficient.

In some embodiments of the present application, based on the above solution, the current load value is calculated according to the following formula:

$$X = |(T_e - BT_s)(V_e - V_s)|;$$

$$K = -(Z2/Z1+1);$$

wherein X is the current load value, $T_e$ is the current engine torque, $T_s$ is the current generator torque, K is the speed ratio coefficient, $V_e$ is the current engine rotational speed, $V_s$ is the current generator rotational speed, $Z_1$ is the number of teeth of the sun gear, and $Z_2$ is the number of teeth of the ring gear.

In some embodiments of the present application, based on the above solution, the electric drive system further comprises an electric motor, the planet carrier is connected with a wheel-end output shaft and the sun gear is connected with the electric motor. The needle roller bearing load determination unit 601 is further configured to take a current wheel-end output shaft torque as the current planet carrier torque, take a current wheel-end output shaft rotational speed as the current planet carrier rotational speed, take a current electric motor torque as the current sun gear torque, and take a current electric motor rotational speed as the current sun gear rotational speed; and determine the current load value of the needle roller bearings of the planetary gear set according to the current wheel-end output shaft torque, the current wheel-end output shaft rotational speed, the current electric motor torque, and the current electric motor rotational speed.

In some embodiments of the present application, based on the above solution, the lubrication flow rate determination unit 602 is further configured to determine a lubrication flow rate corresponding to the current load value from the preset relationship curve when the preset relationship curve is configured to represent a correspondence between the load value of the needle roller bearings and the lubrication flow rate, and take the determined lubrication flow rate as the target lubrication flow rate of the needle roller bearings; and

determine the oil pump rotational speed corresponding to the current load value from the preset relationship curve when the preset relationship curve is configured to represent a correspondence between the load value of the needle roller bearings and the oil pump rotational speed, and obtain the target lubrication flow rate of the needle roller bearings according to the determined oil pump rotational speed.

In some embodiments of the present application, based on the above solution, the lubrication flow control apparatus further comprises a preset relationship curve determination unit, which is configured to perform a reliability test on the electric drive system to obtain a plurality of load values of the needle roller bearings of the planetary gear set, and the lubrication flow rate or the oil pump rotational speed corresponding to each load value under the condition that the reliability test is passed; and fit all the load values and the lubrication flow rates corresponding to the load values, or fit all the load values and the oil pump rotational speeds corresponding to the load values to obtain the preset relationship curve.

In some embodiments of the present application, based on the above solution, the lubrication flow rate control apparatus further comprises an oil pump control unit, which is configured to control a target rotational speed of the oil pump according to the target lubrication flow rate.

Based on the same inventive concept, the embodiment of the present application further provides a lubrication flow rate control device. Referring to Fig. 7, Fig. 7 shows a structural diagram of a lubrication flow rate control device in the embodiment of the present application. The lubrication flow rate control device comprises one or more memories 704, one or more processors 702, and at least one computer program (instruction) stored in the memory 704 and executable on the processor 702, and when the processor 702 executes the computer program (instruction), the methods as described above are implemented.

In the Fig. 7, a bus architecture (represented by a bus 700) is provided, and the bus 700 can comprise any number of interconnected buses and bridges, linking together various circuits of one or more processors represented by the processor 702 and memories represented by the memory 704. The bus 700 can further link various other circuits, such as peripheral devices, voltage regulators, and power management circuits, which are well known in the art, and thus will not be described in further detail herein. A bus interface 705 provides an interface between the bus 700 and a receiver 701 and a transmitter 703. The receiver 701 and the transmitter 703 can be the same component, namely a transceiver, providing units for communication with various other devices over a transmission medium. The processor 702 is configured to manage the bus 700 and perform general processing, and the memory 704 can be configured to store data used by the processor 702 during operation.

Based on the same inventive concept, some embodiments of the present application provide a computer-readable storage medium, the computer-readable storage medium stores at least one computer program instruction, and the at least one computer program instruction is loaded and executed by a processor to implement the operations of the methods as described above.

The functions described herein can be implemented in hardware, software executed by a processor, firmware, or any combination thereof. If implemented in the software executed by the processor, the functions can be stored as one or more instructions or code on a computer-readable medium or transmitted via a computer-readable medium. Other examples and embodiments are within the scope and spirit of the present application and the appended claims. For instance, due to the nature of software, the functions described above can be implemented in software executed by a processor, hardware, firmware, hard-wired circuitry, or any combination thereof. In addition, the functional units can be integrated into a single processing unit, or each unit can physically exist separately, or two or more units can be integrated into one unit.

It should be understood that, in the various embodiments provided in the present application, the disclosed technical content can be implemented in other ways. The apparatus embodiments described above are merely illustrative. For example, the division of units is configured to represent a logical functional division, and in actual implementation, alternative divisions can be employed, such as: a plurality of units or components can be combined or integrated into another system, or certain features can be omitted or not executed. Additionally, any coupling or direct coupling or communication connection shown or discussed can be an indirect coupling or communication connection through one or more interfaces, units, or modules, and can be in electrical or other forms.

The units described as separate components can or can not be physically separate, and the components of the control device can or can not constitute physical units, that is, they can be located in a single place or distributed across a plurality of units. Depending on actual needs, some or all of the units can be selected to achieve the objectives of the embodiments of the present application.

If the integrated unit is implemented as a software functional unit and sold or used as a standalone product, it can be stored on a computer-readable storage medium. Based on this understanding, the technical solution of the present application, or the part that contributes to the existing technology, or the whole or part of the technical solution can be embodied as a software product. This computer software product is stored in a storage medium and comprised several instructions that enable a computer device (which can be a personal computer, server, or network device, etc.) to execute all or part of the steps of the method in the various embodiments of the present application. The storage media described above comprise various media capable of storing computer program instructions, such as USB flash drives, read-only memory (ROM), random access memory (RAM), portable hard drives, magnetic disks, or optical disks.

The above is only exemplary embodiments of the present application and does not limit the scope of the present application. For those skilled in the art, the present application can have various modifications and variations. Any modifications, equivalent substitutions, improvements, etc. made within the spirit and principles of the present application shall be included within the scope of the claims of the present application.

**Claims**

1.    A lubrication flow rate control method, applied to a vehicle, wherein the vehicle comprises an electric drive system, the electric drive system comprises a planetary gear set and an oil pump, in the planetary gear set, planetary gears are supported on pin shafts of a planet carrier through needle roller bearings, and the control method comprises:

determining a current load value of the needle roller bearings of the planetary gear set according to a current planet carrier torque, a current planet carrier rotational speed, a current sun gear torque, and a current sun gear rotational speed; and
determining a target lubrication flow rate of the needle roller bearings according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed.

2. The lubrication flow rate control method according to claim 1, wherein the electric drive system further comprises an engine and a generator, the planet carrier is connected with the engine, and the sun gear is connected with the generator, and the step of determining the current load value of the needle roller bearings of the planetary gear set according to the current planet carrier torque, the current planet carrier rotational speed, the current sun gear torque, and the current sun gear rotational speed comprises:

taking a current engine torque as the current planet carrier torque, taking a current engine rotational speed as the current planet carrier rotational speed, taking a current generator torque as the current sun gear torque, and taking a current generator rotational speed as the current sun gear rotational speed; and
determining the current load value according to the current engine torque, the current engine rotational speed, the current generator torque, the current generator rotational speed, the number of teeth of the sun gear, the number of teeth of a ring gear, a normal pressure angle of the planetary gears, a helix angle of the planetary gears, and a pitch circle diameter of the planetary gears.

3. The lubrication flow rate control method according to claim 2, wherein the current load value is calculated according to the following formula:

$$X = \left| \frac{2\left(T_e - \frac{T_S}{-\left(\frac{Z_2}{Z_1}+1\right)}\right)(V_e - V_s)\tan\alpha}{d\cos\beta} \right|;$$

wherein X is the current load value, $T_e$ is the current engine torque, $T_s$ is the current generator torque, $Z_1$ is the number of teeth of the sun gear, $Z_2$ is the number of teeth of the ring gear, $V_e$ is the current engine rotational speed, $V_s$ is the current generator rotational speed, $\alpha$ is the normal pressure angle, $\beta$ is the helix angle, and d is the pitch circle diameter.

4. The lubrication flow rate control method according to claim 1, wherein the electric drive system further comprises an engine and a generator, the planet carrier is connected with the engine, and the sun gear is connected with the generator, and the step of determining the current load value of the needle roller bearings of the planetary gear set according to the current planet carrier torque, the current planet carrier rotational speed, the current sun gear torque, and the current sun gear rotational speed comprises:

taking a current engine torque as the current planet carrier torque, taking a current engine rotational speed as the current planet carrier rotational speed, taking a current generator torque as the current sun gear torque, and taking a current generator rotational speed as the current sun gear rotational speed;
determining a speed ratio coefficient according to the number of teeth of the sun gear and the number of teeth of the ring gear; and
determining the current load value according to the current engine torque, the current engine rotational speed, the current generator torque, the current generator rotational speed, and the speed ratio coefficient.

5. The lubrication flow rate control method according to claim 4, wherein the current load value is calculated according to the following formula:

$$X = \left| (T_e - BT_s)(V_e - V_s) \right|;$$

$$K = -(Z_2/Z_1 + 1);$$

wherein X is the current load value, $T_e$ is the current engine torque, $T_s$ is the current generator torque, K is the speed ratio coefficient, $V_e$ is the current engine rotational speed, $V_s$ is the current generator rotational speed, $Z_1$ is the number of teeth of the sun gear, and $Z_2$ is the number of teeth of the ring gear.

6. The lubrication flow rate control method according to claim 1, wherein the electric drive system further comprises a electric motor, the planet carrier is connected with a wheel-end output shaft, and the sun gear is connected with the electric motor, and the step of determining the current load value of the needle roller bearings of the planetary gear set according to the current planet carrier torque, the current planet carrier rotational speed, the current sun gear torque, and the current sun gear rotational speed comprises:

taking a current wheel-end output shaft torque as the current planet carrier torque, taking a current wheel-end output shaft rotational speed as the current planet carrier rotational speed, taking a current electric motor torque as the current sun gear torque, and taking a current electric motor rotational speed as the current sun gear rotational speed; and

determining the current load value of the needle roller bearings of the planetary gear set according to the current wheel-end output shaft torque, the current wheel-end output shaft rotational speed, the current electric motor torque, and the current electric motor rotational speed.

7. The lubrication flow rate control method according to any one of claims 1 to 6, wherein the step of determining the target lubrication flow rate of the needle roller bearings according to the current load value and the preset relationship curve comprises:

when the preset relationship curve is configured to represent the correspondence between the load value of the needle roller bearings and the lubrication flow rate, determining a lubrication flow rate corresponding to the current load value from the preset relationship curve, and taking the determined lubrication flow rate as the target lubrication flow rate of the needle roller bearings; and

when the preset relationship curve is configured to represent the correspondence between the load value of the needle roller bearings and the oil pump rotational speed, determining the oil pump rotational speed corresponding to the current load value from the preset relationship curve, and obtaining the target lubrication flow rate of the needle roller bearings according to the determined oil pump rotational speed.

8. The lubrication flow rate control method according to any one of claims 1 to 6, wherein the control method further comprises:

performing a reliability test on the electric drive system to obtain a plurality of load values of the needle roller bearings of the planetary gear set, and the lubrication flow rate or the oil pump rotational speed corresponding to each load value under the condition that the reliability test is passed; and

fitting all the load values and the lubrication flow rates corresponding to the load values, or fitting all the load values and the oil pump rotational speeds corresponding to the load values to obtain the preset relationship curve.

9. The lubrication flow rate control method according to any one of claims 1 to 6, wherein the control method further comprises:

controlling a target rotational speed of the oil pump according to the target lubrication flow rate.

10. A lubrication flow rate control device, comprising a processor and a memory, wherein the memory stores computer program instructions executable by the processor, and when the computer program instructions are executed by the processor, the processor is configured to implement the steps of the method according to any one of claims 1 to 9.

Determining a current load value of the needle roller bearings of the planetary gear set according to a current planet carrier torque, a current planet carrier rotational speed, a current sun gear torque, and a current sun gear rotational speed — 101

Determining a target lubrication flow rate of the needle roller bearings according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed — 102

Fig. 1

Lubricating Oil

Fig. 2

## Oil Pump Rotational Speed – PV Value

Y=A*ln(X)-B

● Reliability Test Pass Point
······· Fitted Curve

Fig. 3

| Determining a current load value of the needle roller bearings of the planetary gear set according to a current planet carrier torque, a current planet carrier rotational speed, a current sun gear torque, and a current sun gear rotational speed | 401 |

↓

| Determining a target lubrication flow rate of the needle roller bearings according to the current load value and a preset relationship curve, wherein the preset relationship curve is configured to represent a correspondence between the load value of the needle roller bearings and the lubrication flow rate, or a correspondence between the load value of the needle roller bearings and an oil pump rotational speed | 402 |

↓

| Controlling a target rotational speed of the oil pump according to the target lubrication flow rate | 403 |

Fig. 4

Fig. 5

Fig. 6

Fig. 7

## INTERNATIONAL SEARCH REPORT

| International application No. |
| --- |
| **PCT/CN2024/120243** |

| A. | CLASSIFICATION OF SUBJECT MATTER |
| --- | --- |

F16H 57/04(2010.01)i; F16N 29/02(2006.01)i

According to International Patent Classification (IPC) or to both national classification and IPC

| B. | FIELDS SEARCHED |
| --- | --- |

Minimum documentation searched (classification system followed by classification symbols)

IPC: F16H F16N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 东风汽车, 柯孟龙, 润滑, 冷却, 量, 滚针, 轴承, 载荷, 受力, 载重, 行星架, 太阳轮, 太阳齿轮, 中心轮, 中心齿轮, 转矩, 力矩, 转速, 曲线, 计算, 控制, 泵, lubricat+, flow, rate, needle, bear+, load, planet+, carrier, sun, wheel, gear, torque, speed, rotat+, curve

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117386792 A (DONGFENG MOTOR GROUP CO., LTD.) 12 January 2024 (2024-01-12) claims 1-10, description, paragraphs [0045]-[0109], and figures 1-7 | 1-10 |
| PX | CN 117090905 A (DONGFENG MOTOR GROUP CO., LTD.) 21 November 2023 (2023-11-21) description, paragraphs [0059]-[0118], and figures 1-8 | 1-10 |
| Y | CN 218818088 U (HYCET TRANSMISSION SYSTEM (JIANGSU) CO., LTD.) 07 April 2023 (2023-04-07) description, paragraphs [0001]-[0020] and [0027]-[0040], and figures 1 and 2 | 1, 6-10 |
| Y | 张磊 等 (ZHANG, Lei et al.). "分动器滚针轴承设计与润滑改进方案研究 (Research on Needle Roller Bearing Design and Lubrication Improvement of the Transfer Box)" 汽车技术 (Automobile Technology). No. 04, 24 April 2013 (2013-04-24), ISSN: 1000-3703, pages 22-25 and 53 | 1, 6-10 |
| A | JP 2005265128 A (NSK LTD.) 29 September 2005 (2005-09-29) entire document | 1-10 |

| ✓ Further documents are listed in the continuation of Box C. | ✓ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **12 November 2024** | **04 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/120243**

| C. | DOCUMENTS CONSIDERED TO BE RELEVANT | |
|---|---|---|
| Category* | Citation of document, with indication, where appropriate, of the relevant passages | Relevant to claim No. |
| A | CN 103062379 A (MOVENTAS GEARS OY) 24 April 2013 (2013-04-24)<br>    entire document | 1-10 |

Form PCT/ISA/210 (second sheet) (July 2022)

**INTERNATIONAL SEARCH REPORT**
Information on patent family members

International application No.

**PCT/CN2024/120243**

| Patent document cited in search report | | | Publication date (day/month/year) | Patent family member(s) | Publication date (day/month/year) |
|---|---|---|---|---|---|
| CN | 117386792 | A | 12 January 2024 | None | |
| CN | 117090905 | A | 21 November 2023 | None | |
| CN | 218818088 | U | 07 April 2023 | None | |
| JP | 2005265128 | A | 29 September 2005 | None | |
| CN | 103062379 | A | 24 April 2013 | None | |

Form PCT/ISA/210 (patent family annex) (July 2022)